# EUROPÄISCHE PATENTANMELDUNG

(11) **EP 0 764 554 A1**
(43) Veröffentlichungstag der Anmeldung: **26.03.1997**
(21) Anmeldenummer: 96105300.6
(22) Anmeldetag: 03.04.1996
(51) Int. Cl.: B60J 7/10

(54) **Haken zur Befestigung von insbesondere Expanderseilen in Verbindung mit Planen für Lastkraftwagen**

(30) Priorität: 25.09.1995 DE 29515333 U
(71) Anmelder: Franz Miederhoff oHG, D-59846 Sundern (DE)
(72) Erfinder: Than, Johannes, 59846 Sundern (DE)
(74) Vertreter: Patentanwälte Meinke, Dabringhaus und Partner

(57) **Zusammenfassung**

Mit einem Haken zur Befestigung von elastischen Spann- oder Befestigungsseilen in Verbindung mit Planen für Lastkraftwagen, Zeltplanen, Schiffsplanen, Abdeckplanen od. dgl., soll eine Lösung geschaffen werden, mit der die bekannte lästige Art der Befestigung von Haken vermieden werden kann, derart, daß die Haken jederzeit ohne Abfädeln benachbarter Haken erneut am Expanderseil angebracht werden können, falls ein Haken einmal zerstört wurde und damit ersetzt werden muß.

Dies wird dadurch erreicht, daß der Haken (1) als Kunststoffkörper ausgebildet ist mit einem geraden Mittelsteg (5) und außenrandseitig je einer auf die gleiche Mittelstegseite (5a) hin gekrümmten hakenbildenden Einwölbung (6, 7) und daß die eine Einwölbung (6) einen querschnittlich im wesentlichen kreisförmigen Aufnahmeabschnitt für das zu befestigende Expanderseil (2) bildet mit einem zum geraden Mittelsteg (5a) weisenden offenen Spalt (8), wobei der offene Spalt (8) in seiner Weite kleiner ist als der Querschnitt des Expanderseiles (2) im entspannten Zustand oder in einer gebrauchsmäßigen Spannung.

## Beschreibung

Die Erfindung richtet sich auf einen Haken zur Befestigung von elastischen Spann- oder Befestigungsseilen in Verbindung mit Planen für Lastkraftwagen, Zeltplanen, Schiffsplanen, Abdeckplanen od. dgl.

Beispielsweise werden Planen von Kraftfahrzeugen häufig mit sogenannten Expanderschnüren in einer Art Zick-Zack-Spannweise an den Bordwänden der Fahrzeuge befestigt, die zum Teil unmittelbar mit Haken ausgerüstet sind. Die Expanderseile sind dabei durch Ösen in der Lkw-Plane gezogen und werden jeweils auf Haken gelegt, die in der Regel in der Mitte zwischen zwei Ösen an der Bordwand angeordnet sind.

Eine andere Möglichkeit der Befestigung besteht darin, daß die Haken nicht an der Bordwand ortsfest befestigt sind, sondern in den Zwischenräumen zwischen den Ösen der Plane mittels eigener Ösenschlaufen jeweils auf die Expanderseile aufgeschoben werden und damit zwischen den Ösen am Expanderseil zur Verfügung stehen. Ein Nachteil dieser Art der Befestigung besteht darin, daß bei einer Zerstörung eines Hakens zu dessen Auswechslung wenigstens so viel Expanderseil und damit auch so viele benachbarte Haken abgefädelt werden müssen, bis man zum zerstörten Haken kommt, diesen durch einen neuen Haken ersetzt und wiederum sämtliche anderen Haken jeweils unter Einfädelung durch die Ösen neu aufziehen muß.

Einige zum Teil vergleichsweise aufwendige oder für das vorliegende Einsatzgebiet nicht geeignete Hakenkonstruktionen sind beispielsweise im Stand der Technik vorbeschrieben, so in der DE-AS-21 59 730, DE-34 31 310-A1, DE-80 06 520-U1 oder der FR-889 229.

Aufgabe der Erfindung ist Schaffung einer Lösung, mit der diese lästige Art der Befestigung von Haken vermieden werden kann, derart, daß die Haken jederzeit ohne Abfädeln benachbarter Haken erneut am Expanderseil angebracht werden können, falls ein Haken einmal zerstört wurde und damit ersetzt werden muß.

Mit einem Haken der eingangs bezeichneten Art wird diese Aufgabe gemäß der Erfindung durch die kennzeichnenden Merkmale des Anspruches 1 gelöst.

Mit einem so gestalteten Haken, der praktisch über zwei außenrandseitige, gegenüberliegende Einwölbungen verfügt, ist es möglich, die eine Einwölbung zur Fixierung am Expanderseil zu nutzen und die andere Einwölbung in Riemenkrampen an der Bordwand eines Fahrzeuges oder in Befestigungsprofilen an der Bordwand einzuhaken.

Dabei ist es zweckmäßig, daß die eine Einwölbung einen querschnittlich im wesentlichen kreisförmigen Aufnahmeabschnitt für das zu befestigende Expanderseil bildet mit einem zum geraden Mittelsteg weisenden offenen Spalt und der offene Spalt in seiner Weite kleiner ist als der Querschnitt des Expanderseiles in einem entspannten Zustand oder in einer gebrauchsmäßigen Spannung.

Hier macht sich die Erfindung die Erkenntnis zunutze, daß sich der Querschnitt des Expanderseiles stark verringert, damit das Expanderseil überdurchschnittlich stark gespannt wird. Diese starke Querschnittsverengung kann benutzt werden, um den Haken über den offenen Spalt über das Expanderseil zu schieben. Ist das Expanderseil dann entspannt oder geringfügig gespannt, kann der Haken gleichwohl nicht vom Expanderseil herunterrutschen, da der Spalt immer noch enger ist als die dann auftretenden Querschnitte, so daß der Haken im Prinzip verlierungsfrei auf dem Expanderseil geführt ist.

Der den freien Haken bildende gekrümmte Hakenwandbereich kann etwas anders gestaltet sein, etwa in der Weise, daß ein Spalt freigelassen wird, der deutlich weiter ist als derjenige, der zur Fixierung des Expanderseiles dient, um das Einhaken in Riemenkrampen oder das Hintergreifen von entsprechenden Profilen an der Bordwand eines Fahrzeuges zu erleichtern.

Der Haken kann in seinem Mittelbereich auch verstärkt ausgebildet sein, um seine Lebensdauer zu erhöhen.

An dieser Stelle sei bemerkt, daß der Haken nicht nur für die Befestigung von Expanderseilen an Lkw-Planen herangezogen werden kann, er kann auch in entsprechende Auffädelungen an Expanderseilen, beispielsweise an der Schiffspersenning, vorgesehen sein, ein Planwenden etwa zur Bildung eines Sichtschutzes od. dgl. mehr.

Die Erfindung ist nachstehend anhand der Zeichnung beispielsweise näher erläutert. Diese zeigt in den
- Fig. 1 bis 3: Vorderseiten und Rückansicht auf einen Haken,
- Fig. 4 und 5: Aufsicht und Seitenansicht auf ein Anwendungsbeispiel sowie in den
- Fig. 6 und 7: Aufsicht und Seitenansicht auf ein abgewandeltes Anwendungsbeispiel.

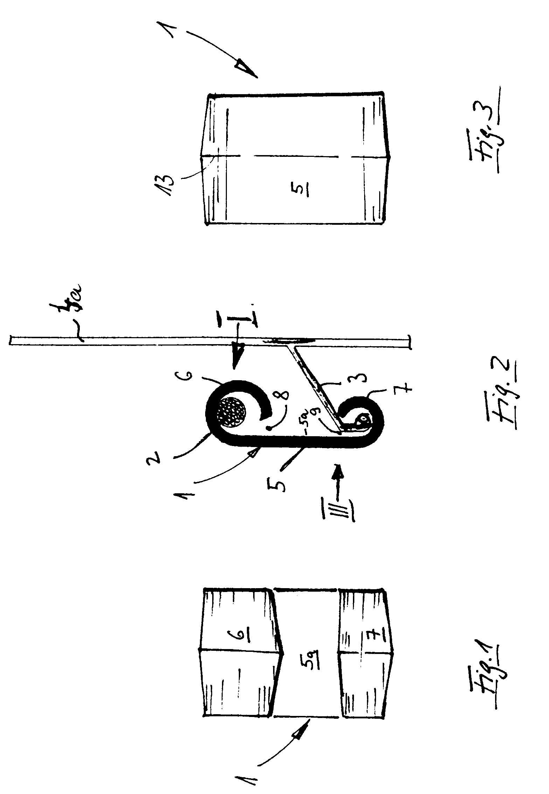

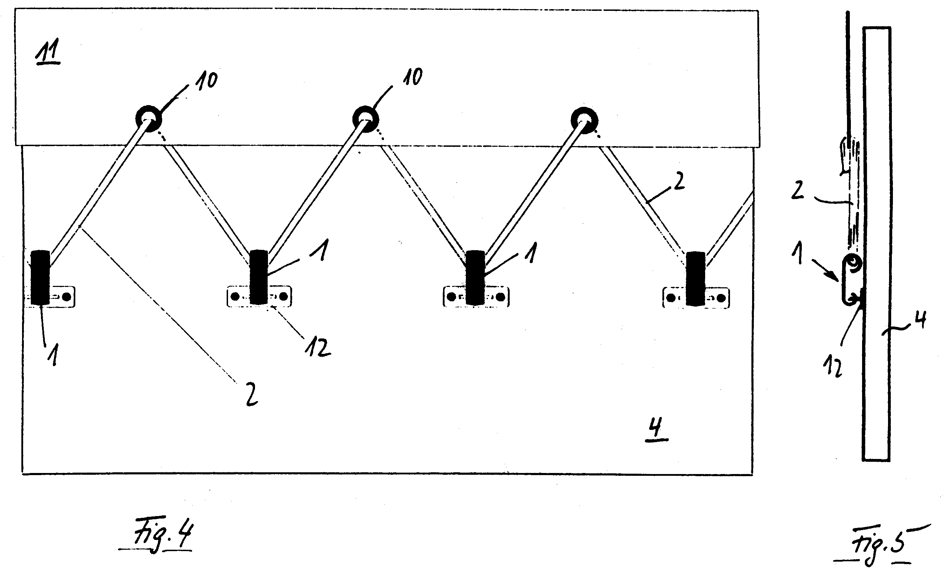

Der in den Fig. 1 bis 3 dargestellte, allgemein mit 1 bezeichnete Haken ist als Kunststoffkörper ausgebildet und dient zur Befestigung beispielsweise eines sogenannten Expanderseiles 2 an einer Hakenleiste 3 einer in Fig. 2 nur andeutungsweise wiedergegebenen Wand 4 bzw. einer Lkw-Ladefläche.

Der Haken 1 weist einen im wesentlichen gerade verlaufenden Mittelsteg 5 auf, an den sich außenrandseitig zwei zur Mittelsteginnenseite 5a hin gekrümmte hakenbildende Einwölbungen 6 und 7 anschließen, wie sich dies insbesondere aus Fig. 1 in Verbindung mit Fig. 2 ergibt.

Die Einwölbung 6 weist einen mit 8 bezeichneten Spalt zur Mittelsteginnenseite 5a auf, während die Einwölbung 7 einen mit 9 bezeichneten Spalt derart bildet, daß sich der Haltesteg 3 mit seinem abgekröpften Ende dort einlegen kann, wie sich dies aus Fig. 2 ergibt.

Die Besonderheit des Spaltes 8 der Einwölbung 6 besteht darin, daß die Spaltbreite geringer ist als der Querschnitt des Expanderseiles 2 selbst in einem geringfügig expandierten Zustand. Erst wenn das Expanderseil 2 sehr stark gespannt wird und damit einen deutlich verjüngten Querschnitt aufweist, kann es durch den Spalt 8 in das Innere der Einwölbung 6 hineingeschoben werden. Nach Entspannung ist der Haken 1 am Expanderseil 2 verlierungsfrei befestigt.

Wie sich dies aus Fig. 2 ergibt, können eine Vielzahl von Expanderseilquerschnitten dort eingerastet werden. In der Praxis kann es sich beispielsweise um Expanderseile handeln mit einem Querschnitt von 4 bis 12 mm Durchmesser.

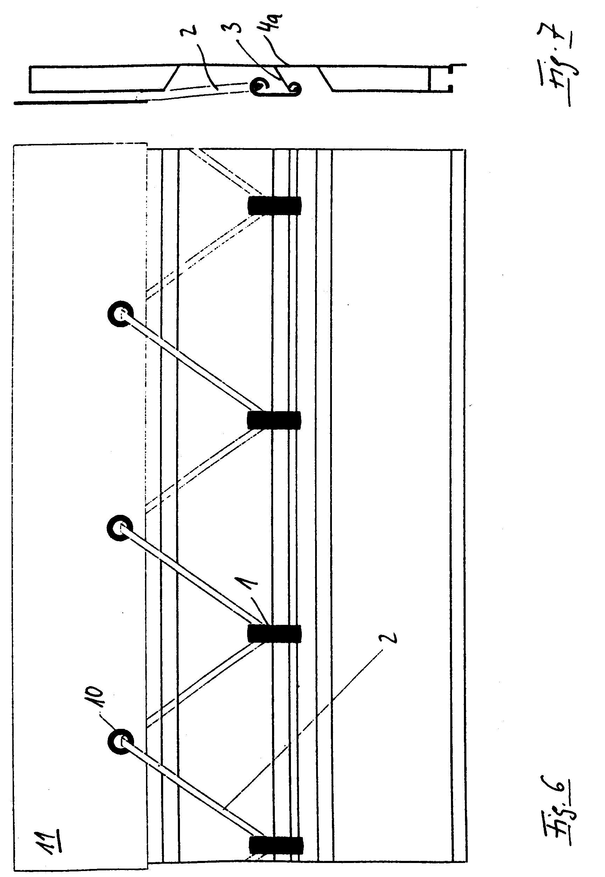

In den Fig. 4 und 5 ist ein Anwendungsbeispiel dargestellt. Hier sind die Haken 6 auf einem Expanderseil 2 aufgefädelt, welches zick-zack-förmig durch Ösen 10 in einer Lkw-Plane 11 gezogen ist, wobei zwischen zwei benachbarten Ösen 10 jeweils ein Haken 1 aufgeklipst ist.

Die Haken 1 im Beispiel der Fig. 4 und 5 sind in auf der Bordwand 4 befestigten Riemenkrampen 12 eingehakt.

Geht beispielsweise ein solcher Haken 1 verloren, z.B. dadurch, daß er bricht, kann ein neuer Haken 1 leicht auf den entsprechenden Abschnitt des Expanderseiles 2 aufgeklipst werden, indem das Expanderseil an dieser Stelle stark unter Zug gesetzt wird, um den Querschnitt zu verringern. Der Haken 1 wird dann mit seinem Spalt 8 über das Expanderseil 2 gehängt, das Expanderseil 2 wird entspannt und der neue Haken ist am Expanderseil 2 verlierungsfrei fixiert.

In den Fig. 6 und 7 ist ein abgewandeltes Beispiel dargestellt bei ansonsten gleichen Verhältnissen, so daß dort auch die gleichen Bezugszeichen so weit wie möglich eingesetzt wurden. Der Unterschied hier liegt darin, daß die Haken 1 nicht in Riemenkrampen eingeklemmt werden, sondern hinter ein Hakenprofil 3 eines Bordwandprofiles 4a.

Zur Verstärkung kann der Mittelbereich des Hakens querschnittlich verdickt ausgebildet sein, wie dies in den Fig. 1 und 3 angedeutet ist. Der die Verdickung andeutende Grad ist in Fig. 3 zur einfacheren Beschreibung mit 13 bezeichnet.

Natürlich ist das beschriebene Ausführungsbeispiel nicht auf die dargestellten Ausführungsbeispiele beschränkt. Weitere Ausgestaltungen sind möglich, ohne den Grundgedanken zu verlassen.

## Patentansprüche

1. Haken zur Befestigung von elastischen Spann- oder Befestigungsseilen in Verbindung mit Planen für Lastkraftwagen, Zeltplanen, Schiffsplanen, Abdeckplanen od. dgl.,
dadurch gekennzeichnet,
daß der Haken (1) als Kunststoffkörper ausgebildet ist mit einem geraden Mittelsteg (5) und außenrandseitig je einer auf die gleiche Mittelstegseite (5a) hin gekrümmten hakenbildenden Einwölbung (6,7) und daß die eine Einwölbung (6) einen querschnittlich im wesentlichen kreisförmigen Aufnahmeabschnitt für das zu befestigende Expanderseil (2) bildet mit einem zum geraden Mittelsteg (5a) weisenden offenen Spalt (8), wobei der offene Spalt (8) in seiner Weite kleiner ist als der Querschnitt des Expanderseiles (2) im entspannten Zustand oder in einer gebrauchsmäßigen Spannung.

2. Haken nach Anspruch 1,
dadurch gekennzeichnet,
daß der den freien Haken bildende gekrümmte Hakenwandbereich (7) unter Freilassung eines Spaltes (9) geringfügig auf den geraden Hakenbereich gerichtet ist.

3. Haken nach Anspruch 1 oder 2,
dadurch gekennzeichnet,
daß der Haken (1) in seinem Mittelbereich (13) verstärkt ausgebildet ist.
